# FASCICULE DE BREVET EUROPEEN

(11) **EP 1 919 761 B1**
(45) Date de publication et mention de la délivrance du brevet: **26.10.2011**
(21) Numéro de dépôt: 06808270.0
(22) Date de dépôt: 31.08.2006
(51) Int. Cl.: B62K 5/04, B62K 3/00

(54) **CYCLE**
FAHRRAD
CYCLE

(30) Priorité: 31.08.2005 FR 0552629
(43) Date de publication de la demande: 14.05.2008
(73) Titulaire: Molle, Marie-France, 75012 Paris (FR)
(72) Inventeur: Molle, Marie-France, 75012 Paris (FR)
(86) Numéro de dépôt international: PCT/FR2006/050831
(87) Numéro de publication internationale: WO 2007/026106

(56) Documents cités:
- WO-A-03/024771
- WO-A-2005/047093
- FR-A- 831 002
- US-A- 2 518 537
- US-A- 4 826 191
- US-A- 4 925 200
- US-A- 5 201 538

## Description

On connaît par la demande de brevet FR 2 834 684 un tricycle comportant une roue avant sur laquelle sont montées des pédales. Ce tricycle est dépourvu de colonne de direction. Lors du pédalage, .ce tricycle peut nécessiter un effort physique important au niveau des cuisses ce qui peut provoquer des fatigues rapides.

On connaît également par la demande FR 831 002 un tricycle dont la tige formant fourche est reliée à la tige solidaire du volant de direction par un système de type cardan. Ce véhicule comporte une poutre longitudinale sensiblement horizontale. Ce type de tricycle ne permet pas au conducteur en position couchée ou semi-couchée de sortir aisément et n'est pas satisfaisant du point de vue de l'ergonomie.

La publication US 5 201 53R .divulgue un tricycle possédant un dispositif permettant d'ajuster le siège de façon à amener le conducteur plus ou moins loin des pédales selon la longueur de ses jambes. Un tel dispositif ne comporte pas un système de type cardan.

Il existe par ailleurs des tricycles du type permettant le pédalage en position couchée ou semi-couchée, les jambes en avant. Ce type de tricycle comporte un pédalier placé au-dessus de la roue avant. La position couchée ou semi-couchée peut entrainer une fatigue de la nuque, en cas d'utilisation prolongée. De plus, ce type de tricycle ne permet pas au conducteur en position couchée ou semi-couchée de sortir aisément:

La présente invention vise à proposer un cycle alternatif, permettant une installation confortable du conducteur lors du pédalage et de bloquer la colonne de direction du système de direction dans une position angulaire prédéfinie, qui correspond à une position d'utilisation du cycle, ou dans une position rabattue sur le châssis.

L'invention a ainsi pour objet un cycle selon la revendication 1. Les revendications 2 à 10 présentent d'autres caractéristiques du cycle de l'invention.

L'articulation de type cardan permet te déplacement angulaire relatif de deux éléments présentant des axes géométriques respectifs qui se coupent en un point prédéfini. Cette articulation de type cardan permet aussi de répondre aux exigences de la position assise ergonomique dans le but de pédaler sans pénibilité.

US 4 925 200 divulgue une bicylette dans laquelle la propulsion est réalisée par action sur un levier.

La demande WO 2005/047093 divulgue un vélo disposant d'un mécanisme permettant le passage du conducteur de la position assise à la position couchée.

WO 03/024771 divulgue un cycle selon le préambule de la revendication 1, comportant une selle montée de façon mobile en translation sur un châssis, de façon à pouvoir s'adapter à la taille des différents conducteurs.

La structure du cycle selon l'invention résulte avantageusement d'autres considérations ergonomiques.

Notamment, le système de direction peut présenter une disposition angulaire permettant au conducteur du cycle d'adopter une position assise de pédalage confortable lui évitant notamment des troubles musculaires et/ou squelettiques.

Le système de direction peut être disposé de manière à permettre au conducteur de sortir aisément du cycle ou de s'y installer aisément, sans avoir à enjamber le système de direction.

Le conducteur peut sortir d'autant plus aisément du cycle qu'il est en position assise, notamment plus aisément que dans le cas d'un cycle sur lequel le conducteur adopte une position couchée.

En outre, le cycle peut être agencé de manière à ce que le conducteur puisse pédaler dans une position assise dans laquelle les axes respectifs de la tête et du tronc du conducteur forment un angle notamment compris entre 5° et 40°, par exemple entre 10° et 30°, étant notamment inférieur ou égal à 20°.

Cette position du conducteur permet, d'une part, une tenue confortable de la tête et, d'autre part, une visibilité adaptée pour la conduite.

L'axe de la tête est de préférence sensiblement vertical.

L'angle entre l'axe de la tête et l'axe du tronc, par exemple voisin de 20°, permet de déterminer la position du bassin et, par la suite, la position du pédalier.

Avantageusement, le cycle comporte un pédalier et un siège pour un conducteur agencés de manière à ce que, lors du pédalage, les axes respectifs du tronc et des cuisses du conducteur forment un angle variant entre environ 75° et 160°, notamment entre 80° et 140°, pour le mouvement alternatif des jambes.

Lors du pédalage, les positions angulaires relatives de la nuque, de la hanche, des genoux et des chevilles peuvent procurer au conducteur un confort relativement important.

Dans un exemple de mise en oeuvre de l'invention, le cycle est agencé de manière à ce qu'un conducteur puisse adopter au repos, à l'arrêt du cycle, une position assise, pied à terre, l'un des genoux formant un angle compris entre 90° et 150°, notamment entre 120° et 130°.

De préférence, le cycle comporte un siège pour un conducteur, comprenant une assise et un dossier, le dossier étant avantageusement fixé de manière rigide à l'assise.

Le dossier est de préférence rigide au niveau des lombaires.

Lors du pédalage, le conducteur peut prendre appui sur le dossier, ce qui lui permet de développer davantage de puissance et transmettre une force maximale sur le pédalier sans perte d'énergie.

Ceci est particulièrement avantageux lors du démarrage, d'une accélération ou d'une montée.

En outre, la présence du dossier permet d'éviter notamment une fatigue des bras, à la différence de la position sur un vélo ou un tricycle classique sur lequel le pédalage mobilise les bras au niveau du guidon, et également les fesses au niveau de la selle et les jambes au niveau du pédalier.

Dans la position de pédalage sur le cycle selon l'invention, les bras du conducteur forment avec l'axe du tronc, au niveau des épaules, un angle entre 30° et 60°, étant par exemple voisin de 45°.

De préférence, le siège est monté de manière coulissante sur le châssis du cycle, suivant une direction longitudinale du cycle.

Ceci permet notamment d'adapter la position du siège à la taille du conducteur, notamment à la taille de ses jambes.

Le siège peut être réalisé par exemple au moins partiellement en tôle métallique ajourée.

Le siège peut comporter ou non des ailes latérales, par exemple du type pliable vers l'avant et situées au niveau des épaules pour permettre de stabiliser le dos et de caler le haut du corps tout en contribuant à la rigidité du dossier.

Dans un exemple de mise en oeuvre de l'invention, le cycle comporte un système de transmission à double renvoi entre le pédalier et l'une au moins des roues arrières.

Ce système comporte notamment deux lignes de chaîne, une première étant reliée au pédalier et une deuxième étant reliée à un axe de roue arrière.

Ce système à double renvoi peut comporter par exemple un pignon associé à la ligne de chaîne du pédalier, et un moyeu ou une cassette associé(e) à l'autre ligne de chaîne, le pignon et le moyeu ou la cassette étant fixés sur un axe de rotation commun. Ce dernier est fixé sur des branches arquées du châssis *via* des pattes par exemple.

La propulsion du tricycle est avantageusement assurée au niveau des roues arrières et non de la roue avant.

Dans un exemple de mise en oeuvre de l'invention, le tricycle comporte deux axes arrières sur chacun desquels est montée une roue arrière, l'un des axes étant entraîné en rotation par une ligne de chaîne et l'autre étant en roue libre.

Le système de direction comporte le cas échéant, une colonne de direction agencée pour pouvoir être rabattue par pivotement contre le châssis.

La position rabattue de la colonne de direction permet de réduire l'encombrement du cycle et donc de faciliter son rangement par exemple.

Le cycle peut être agencé, le cas échéant, pour permettre le verrouillage de la colonne de direction dans cette position rabattue afin d'empêcher une utilisation normale du cycle et, par conséquent, protéger celui-ci contre une tentative de vol.

Le système de direction est avantageusement agencé de manière à pouvoir être réglable en inclinaison par rapport au châssis afin d'offrir une bonne ergonomie au conducteur lors du pédalage.

Le châssis comporte une poutre centrale avec une portion sensiblement en V, le pédalier du cycle étant de préférence monté sur la poutre centrale, au voisinage du point bas du V.

Cette forme en V au niveau du pédalier permet au conducteur installé sur le cycle de sortir facilement. La poutre centrale présente dans cette zone du pédalier une hauteur relativement faible par rapport au sol et peut être enjambée aisément par le conducteur.

La poutre se prolonge à l'arrière sensiblement à l'horizontale pour former une triangulation avec deux couples de branches pour augmenter la résistance au poids de l'usager.

Avantageusement, le cycle comporte un système antivol agencé pour bloquer le pédalier dans une position prédéfinie, ce système antivol comportant notamment une tige agencée pour s'engager dans une ouverture d'une barre transversale du pédalier, cette tige étant mobile entre une position déverrouillée et une position verrouillée, à l'encontre de l'effort exercé par un organe de rappel élastique.

Le cycle peut comporter, si on le souhaite, d'autres systèmes antivol, par exemple du type comprenant un câble souple, notamment gainé, logé par exemple dans une poutre du châssis qui présente une ouverture de sortie du câble, à l'arrière, pour attacher la ou les roue(s) arrière(s) du tricycle à un support fixe tel qu'un mobilier urbain. Ce câble peut être bobiné à l'intérieur de la poutre par l'intermédiaire d'un ressort à poulie par exemple.

Le cycle peut comporter ou non un ou plusieurs moteurs, notamment électrique, permettant d'assister la propulsion du cycle.

Le moteur peut notamment être un moteur électrique alimenté par exemple par des cellules photovoltaïques, et/ou une ou plusieurs batteries.

Le tricycle peut notamment être adapté pour une utilisation par une personne valide ou une personne à mobilité réduite. Le cas échéant, le tricycle peut comporter des cales pieds et/ou des attelles.

Le cycle peut former, le cas échéant, un bicycle comportant deux roues.

L'invention a encore pour objet, selon un autre de ses aspects, un cycle agencé de manière à ce qu'un conducteur du cycle puisse pédaler dans une position assise dans laquelle les axes respectifs de la tête et du tronc du conducteur forment un angle notamment compris entre 5° et 40°, par exemple entre 10° et 30°, étant notamment inférieur ou égal à 20°.

L'invention a encore pour objet, selon un autre de ses aspects, un cycle comportant un pédalier et un siège pour un conducteur agencés de manière à ce que, lors du pédalage, les axes respectifs du tronc et des cuisses du conducteur forment un angle variant entre environ 75° et 160°, notamment entre environ 80° et 140°.

L'invention pourra être mieux comprise à la lecture de la description détaillée qui va suivre, d'exemples de mise en oeuvre non limitatifs de l'invention, et à l'examen du dessin annexé, sur lequel :
- les figures 1 et 2 représentent, schématiquement et partiellement, deux tricycles,
- la figure 3 est une vue schématique et partielle d'un tricycle avec la colonne de direction rabattue sur le châssis,
- la figure 4 est une vue schématique et partielle d'une articulation de type cardan,
- la figure 5 est une vue agrandie, schématique et partielle, de l'articulation de type cardan entre le système de direction et le support de la roue avant,
- les figures 6A et 7A représentent, schématiquement et partiellement, en coupe suivant VI-VI et VII-VII respectivement, un système de blocage du système de direction de la figure 5, dans deux positions différentes,
- les figures 6B et 7B sont des vues de dessus respectives du système de blocage des figures 6A et 7A,
- la figure 8 représente, schématiquement et partiellement, en perspective, un siège monté sur une poutre de châssis d'un tricycle conforme à l'invention,
- les figures 9 et 10 représentent, schématiquement et partiellement, un système de verrouillage du siège sur la poutre de la figure 8, dans deux positions différentes,
- la figure 11 est une vue en coupe, schématique et partielle, d'un système antivol conforme à l'invention,
- les figures 12 et 13 représentent, schématiquement et partiellement, des éléments du système antivol de la figure 11,
- la figure 14 représente, schématiquement et partiellement, le raccordement de l'élément de l'articulation de type cardan avec une fourche portant la roue avant,
- les figures 15 et 16 sont des schémas illustrant différents angles entre des parties du corps d'un conducteur installé sur un tricycle conforme à l'invention, respectivement lors du pédalage et au repos, et
- la figure 17 est un schéma sensiblement analogue à celui de la figure 15, le conducteur étant vu de dessus.

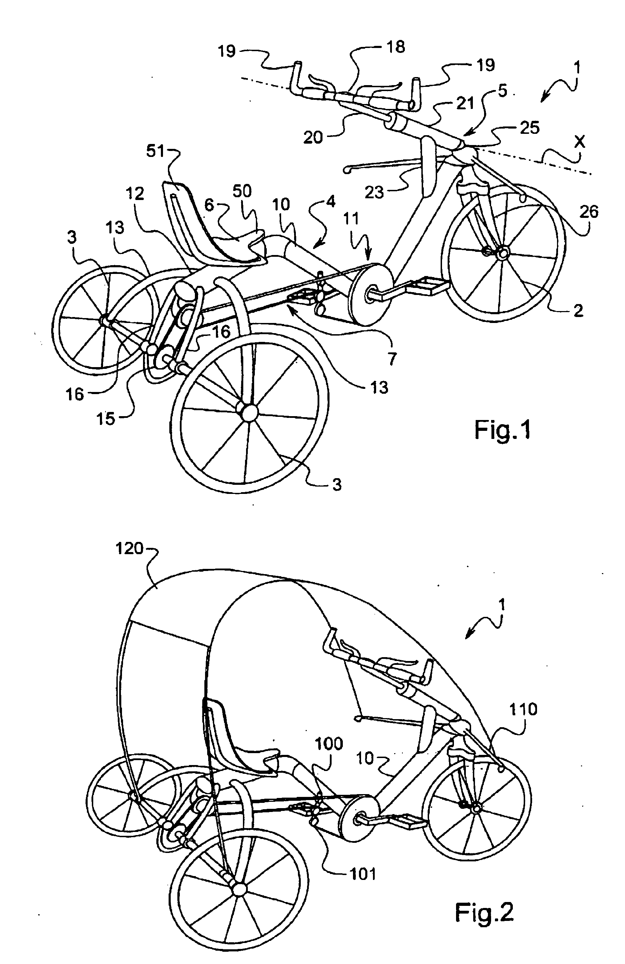

On a représenté sur la figure 1 un tricycle 1 comportant une roue avant 2 et deux roues arrières 3.

Le tricycle 1 comporte en outre un châssis 4, un système de direction 5, un siège 6 et un système de transmission 7 à double renvoi.

On va décrire ci-dessous plus en détail les différents éléments du tricycle 1.

### Le châssis 4

Le châssis 4 comporte une poutre centrale 10 s'étendant de l'avant à l'arrière du tricycle 1 et présentant une zone 11 en V.

La poutre centrale 10 peut par exemple être réalisée à partir d'un élément tubulaire en acier ou un autre matériau.

Le châssis 4 peut comporter une portion 12 sensiblement horizontale s'étendant jusqu'à l'arrière du tricycle et sur laquelle se raccordent deux branches arquées 13, de part et d'autre de cette portion 12.

Chaque branche 13 sert à répartir la charge du conducteur sur les roues arrières 3.

Deux branches 16, sensiblement parallèles, sont prévues à l'arrière pour relier les axes de roue 15 à la poutre 10.

Ces branches 16 et les branches arquées 13 définissent une triangulation avec la portion 12.

Bien entendu, d'autres configurations sont possibles en ce qui concerne le châssis 4, lequel peut comporter par exemple d'autres tubes de renfort.

Les branches 13 peuvent être par exemple droites au lieu d'être arquées.

### Le système de direction 5

Le système de direction 5 comporte un volant 18 avec des poignées 19 de forme ergonomique, avec chacun par exemple une forme sensiblement en L.

La rotation du volant 18 s'effectue dans un plan sensiblement perpendiculaire à un axe de direction X.

Le volant 18 est disposé sensiblement à hauteur des bras du conducteur et relié, direction ou par potence, à un tube de direction 20 s'engageant dans une colonne de direction 21.

La longueur de l'ensemble formé du tube de direction 20 et de la colonne de direction 21 peut être réglable par coulissement de l'un par rapport à l'autre.

La colonne de direction 21 est fixée à la poutre 10 du châssis 4 par l'intermédiaire d'un élément de maintien 23, notamment métallique, soudé à ses extrémités, d'une part, à la poutre 10 et, d'autre part, à la colonne de direction 21.

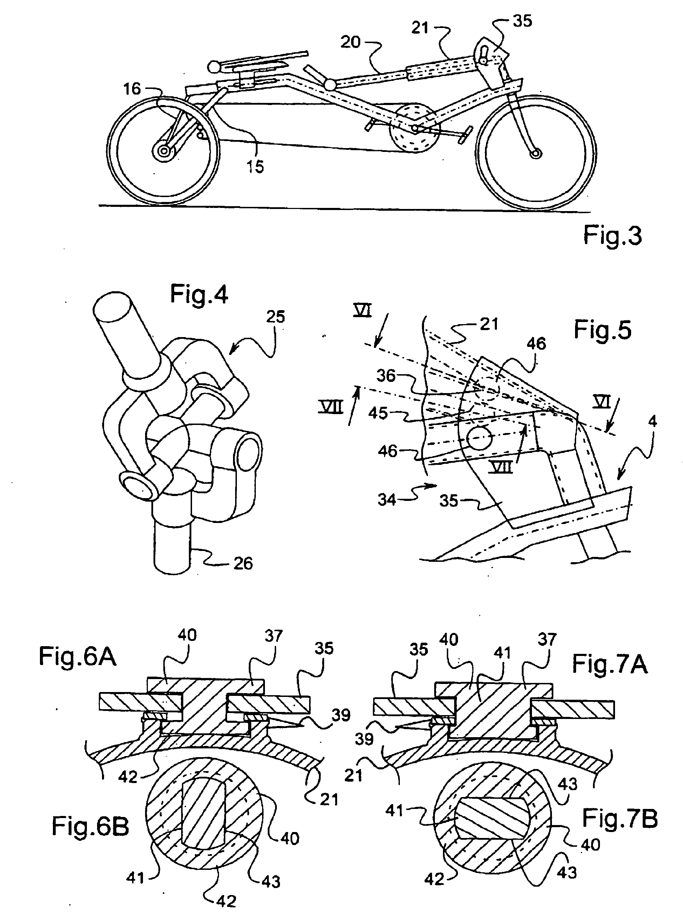

Le système de direction 5, notamment le tube de direction 20, est relié à un support 26 de la roue avant 2 par l'intermédiaire d'une articulation de type cardan 25 (représenté très schématiquement sur la figure 4).

Le support 26 peut comporter par exemple une fourche, comme illustré sur la figure 1.

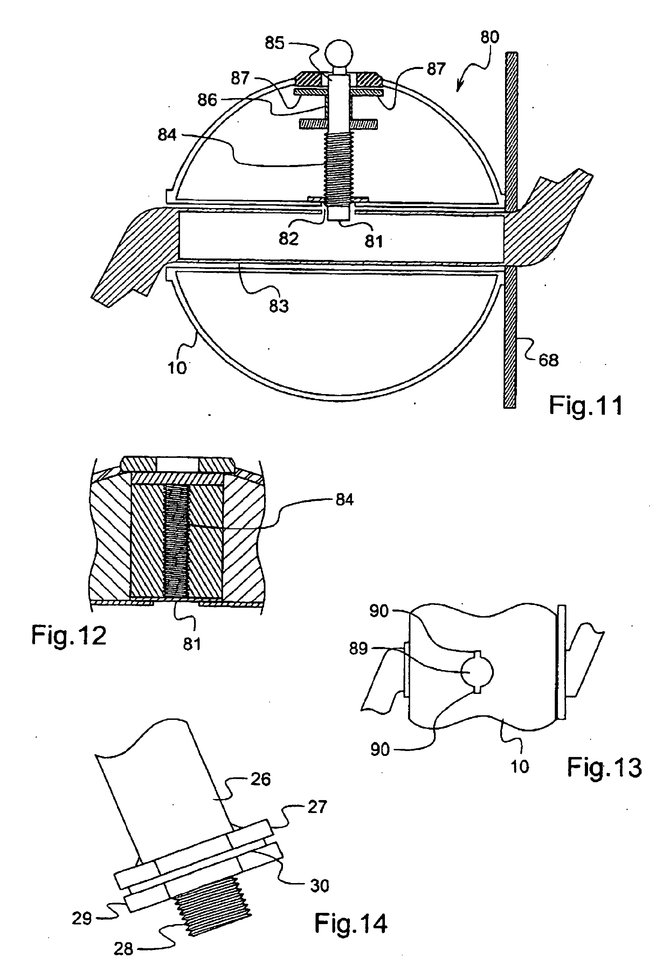

L'articulation de type cardan 25 peut comporter un élément 26 soudé à un écrou 27, par exemple de type hexagonal, avec un taraudage correspondant à un pivot fileté 28 de la fourche 26, comme illustré sur la figure 14.

Une rondelle 30 peut être insérée entre l'écrou 27 et un contre-écrou de serrage 29 vissé sur le pivot de fourche 28, afin d'éviter tout jeu lors des virages.

Comme illustré sur la figure 3, le tricycle peut être dépourvu d'élément de maintien 23 reliant le système de direction 5 au châssis 4.

Dans ce cas, la colonne de direction 21 et le tube de direction 20 peuvent être rabattus contre la poutre 10 du châssis 4 afin de réduire l'encombrement du tricycle.

Celui-ci peut comporter, si on le souhaite, un système de blocage 34 du système de direction, comprenant par exemple un capuchon 35 fixé sur le châssis 4 et pourvu d'une fente 36 permettant d'engager un bouton 37 solidaire de la colonne de direction 21, comme on peut le voir sur la figure 5.

Le bouton 37 est solidarisé à la colonne de direction 21 par l'intermédiaire de rondelles 39 soudées sur la surface extérieure de la colonne de direction 21, comme on peut le voir sur les figures 6A et 7A.

Le bouton 37 peut comporter une portion extérieure 40, une portion intermédiaire 41 et une portion intérieure 42, les portions 40 et 42 présentant un contour circulaire et la portion 41 une forme non circulaire, notamment avec deux bords parallèles rectilignes 43.

La fente 36 présente une zone médiane 45 de largeur réduite, cette largeur étant sensiblement égale à la largeur entre les deux bords 43 de la portion 41 du bouton 37.

La fente 36 comporte une pluralité de zones 46 sensiblement circulaires, de part et d'autre de la zone médiane 45.

Le système de blocage 34 permet de régler l'inclinaison de l'axe de direction X par rapport au châssis 4.

En tournant le bouton 37, il est possible de bloquer la colonne de direction 21 dans une position angulaire prédéfinie dans laquelle le bouton 37 est bloqué dans la fente 46 située en haut. Cette position correspond à une position d'utilisation du tricycle.

Pour rabattre la colonne de direction 21, le bouton 37 est déverrouillé par un mouvement de rotation, puis est amené à travers la zone médiane 45 de largeur réduite, pour être enfin bloqué dans la zone 46 située en bas.

La colonne de direction peut ainsi prendre deux positions distinctes, l'une permettant l'utilisation du tricycle et l'autre permettant d'avoir la colonne de direction 21 rabattue sur le châssis 4.

Dans un exemple non illustré, la fente 36 peut présenter une zone circulaire intermédiaire permettant d'avoir deux positions d'utilisation angulaires différentes.

### Le siège 6

Comme illustré sur la figure 1, le siège 6 comporte une assise 50 et un dossier 51.

Le siège 6 peut être réalisé à partir d'une tôle métallique ajourée par exemple, et comporter des pliures et/ou des découpes agencées pour optimiser la puissance de pédalage, par appui du dos sur le dossier du siège au niveau des lombaires ou de la région sous les omoplates.

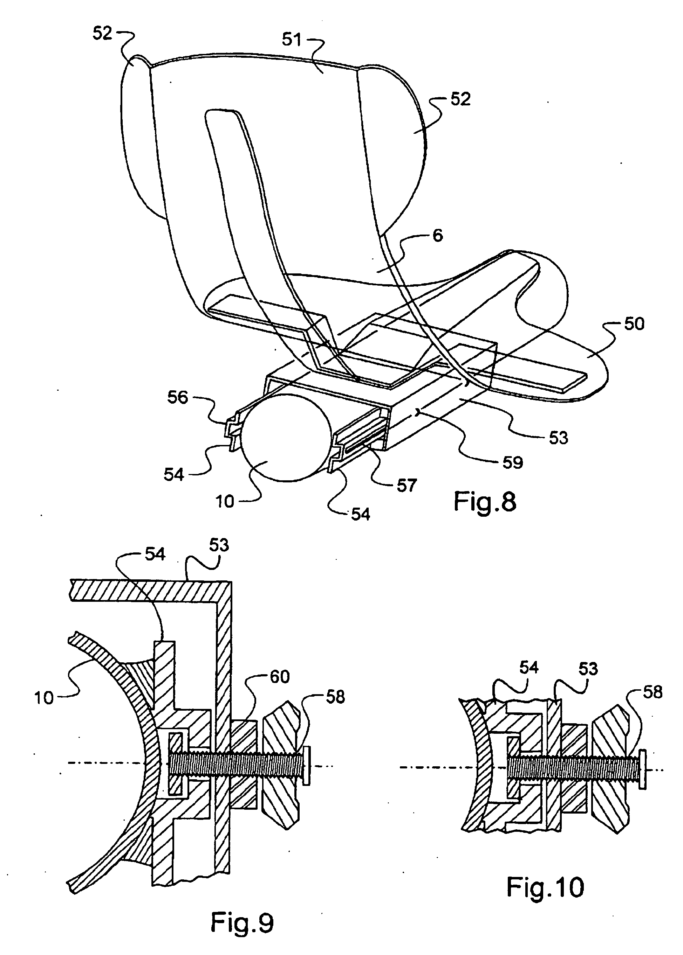

Le siège 6 peut comporter des ailes latérales 52, par exemple du type pliables vers l'avant et situées au niveau des épaules pour permettre de stabiliser le dos et de caler le haut du corps du conducteur (voir figure 8).

En variante, le siège 6 peut être dépourvu de telles ailes latérales (voir figure 1 notamment).

Le siège 6 peut éventuellement recevoir une housse, par exemple en mousse, ou comporter un gel, afin d'augmenter le confort du conducteur.

Le siège 6 peut être monté de manière coulissante sur la poutre 10 du châssis 4 pour permettre de régler la position du siège 6 par rapport au pédalier.

Le siège 6 est fixé de manière rigide sur un socle 53 présentant une section transversale par exemple sensiblement rectangulaire, ce socle 53 étant monté de manière coulissante sur des rails 54 solidaires de la poutre centrale 10 de châssis.

Les rails 54 peuvent être solidarisés à la poutre 10 par exemple par soudure.

Dans l'exemple considéré, chaque rail 54 comporte une portion en relief 56 sur laquelle est réalisée une fente longitudinale 57 permettant la mise en place d'une vis 58, par exemple de type vis papillon, laquelle vis 58 s'étend à travers un orifice 59 réalisé sur une face latérale du socle 53.

Un écrou porte-vis 60 est interposé entre le socle 53 et la tête de la vis 58.

En desserrant les vis 58, il est possible de faire coulisser le socle 53 et le siège 6 le long de la poutre 10 afin de régler la position du siège de manière adaptée au conducteur (voir figure 9).

Une fois cette position atteinte, les vis 58 sont serrées contre les rails 54 afin de bloquer le socle 53 et le siège 6 sur la poutre 10 (voir figure 10).

La hauteur du siège 6 est notamment réglée en fonction de la taille du conducteur, à l'arrêt du tricycle 1, pieds au sol et peut varier par exemple entre 450 et 620 mm par rapport au sol.

### Le svstème de transmission à double renvoi 7

Comme illustré sur la figure 2, le système de transmission 7 comporte deux lignes de chaîne, une première 65 étant reliée à un pédalier 68 et une deuxième 66 étant reliée à un axe de roue 15.

Le pédalier 68 est fixé au niveau du point bas du V de la portion 11 afin de permettre au conducteur d'enjamber facilement le pédalier lorsque celui-ci sort du tricycle ou s'y installe.

Le pédalier 68 peut être fixé en un point du châssis 4, à une distance comprise par exemple entre 150 mm et 450 mm du sol, étant voisine par exemple de 300 mm. Le pédalier 68 peut être séparé du siège 6 d'une distance comprise par exemple entre 400 mm et 800 mm, étant par exemple voisine de 650 mm.

La première ligne de chaîne 65 est reliée, à l'opposé du pédalier 68, à un pignon 70 d'un moyeu à vitesses et dérailleur intégré.

La deuxième ligne de chaîne 66 est reliée d'un côté à un deuxième pignon 71 solidaire en rotation du moyeu à vitesses précité, et de l'autre côté à un autre pignon 72 solidaire de l'axe moteur 15 de la roue arrière droite.

Le tricycle 1 comporte, le cas échéant, des organes de changement de vitesses tels que des manettes, non représentés, fixés sur le guidon 18.

Des éléments de freinage du cycle sont fixés par exemple sur les roues arrières 3 et avant 2.

Les éléments de freinage peuvent être par exemple du type à disque.

Ces disques peuvent être placés sur l'axe des roues droite et gauche, par exemple entre chaque roue 3 et chaque branche arquée 13. En variante, ces disques peuvent être placés entre les branches 16.

Dans ces deux cas, les branches 13 ou 16 servent de support au système de freinage des disques.

Le tricycle 1 peut comporter ou non un élément de freinage associé à la roue avant 2.

Dans l'exemple illustré à la figure 2, le système de transmission 7 comporte deux galets 100 de conduite de la ligne de chaîne 65 et un tendeur de chaîne 101.

### Système antivol

Le tricycle 1 peut comporter, si on le souhaite, un système antivol 80 agencé pour bloquer le pédalier 68 dans une position prédéfinie.

Comme illustré sur la figure 11, ce système antivol 80 comporte une tige 81 agencée pour s'engager dans une ouverture 82 réalisée sur une barre transversale 83 du pédalier 68, cette tige étant mobile entre une position déverrouillée et une position verrouillée, à l'encontre de l'effort exercé par un organe de rappel élastique 84 constitué, dans l'exemple considéré, par un ressort tel qu'un ressort hélicoïdal.

Le système antivol 80 comporte une clé à barillet 85 permettant de verrouiller la tige 81 dans la position verrouillée.

La clé 85 comporte un cylindre 86 pourvu de deux éléments en saillie 87 formant des pênes, lesquels viennent s'appliquer contre la surface intérieure de la poutre 10.

Ces éléments 87 et le cylindre 86 sont introduits dans l'espace intérieur de la poutre 10 grâce à la présence d'une ouverture 89 pourvue d'encoches 90, comme illustré sur la figure 13.

Lorsque la clé 85 est retirée par exemple par une rotation d'un demi-tour, le ressort 84 provoque le déplacement vers le haut de la tige 81, ce qui libère la barre transversale 83 du pédalier 68, dans la position déverrouillée (voir figure 12).

### Accessoires

Le tricycle 1 peut comporter un compartiment de rangement.

Ce compartiment peut comporter par exemple un panier fixé sous le siège.

Le tricycle 1 peut comporter, si on le souhaite, un tube 110 fixé par exemple sur la poutre 10 et agencé pour permettre la fixation notamment d'un toit 120. Le tube 110 peut servir de pare-chocs.

Ce toit 120, amovible ou non, peut comporter des éléments rigides et/ou souples et servir par exemple à protéger de la pluie ou du soleil.

Le tricycle 1 peut également comporter un système d'assistance électrique au pédalage au moyen d'un moteur de tout type.

Le toit 120 peut recevoir, le cas échéant, des cellules photovoltaïques pour l'alimentation du moteur mais d'autres sources d'énergie sont possibles pour le moteur.

Bien entendu, le tricycle 1 peut comporter tout autre type d'accessoires, par exemple un siège pour bébé.

### Ergonomie du tricycle 1

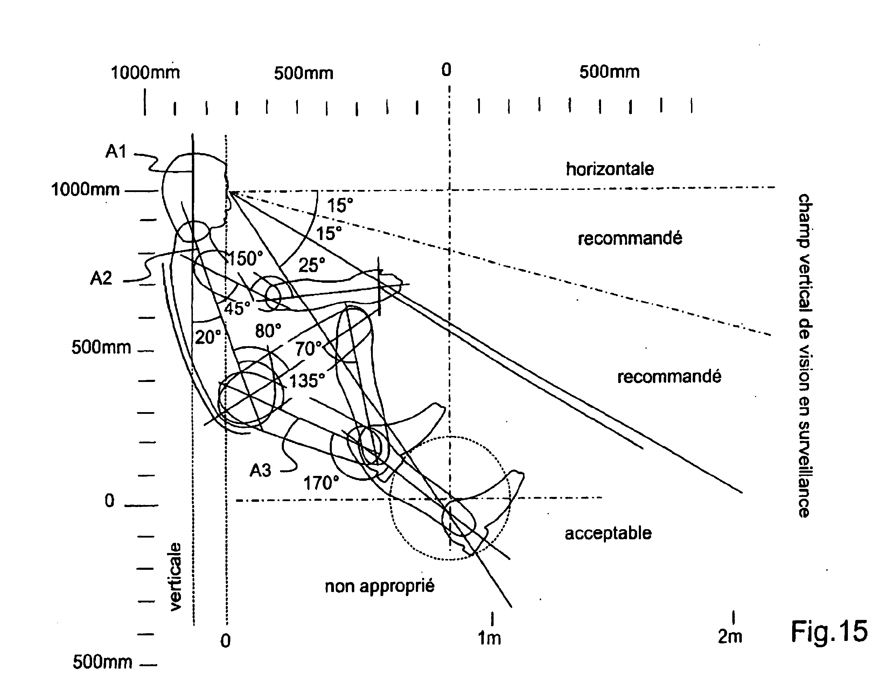

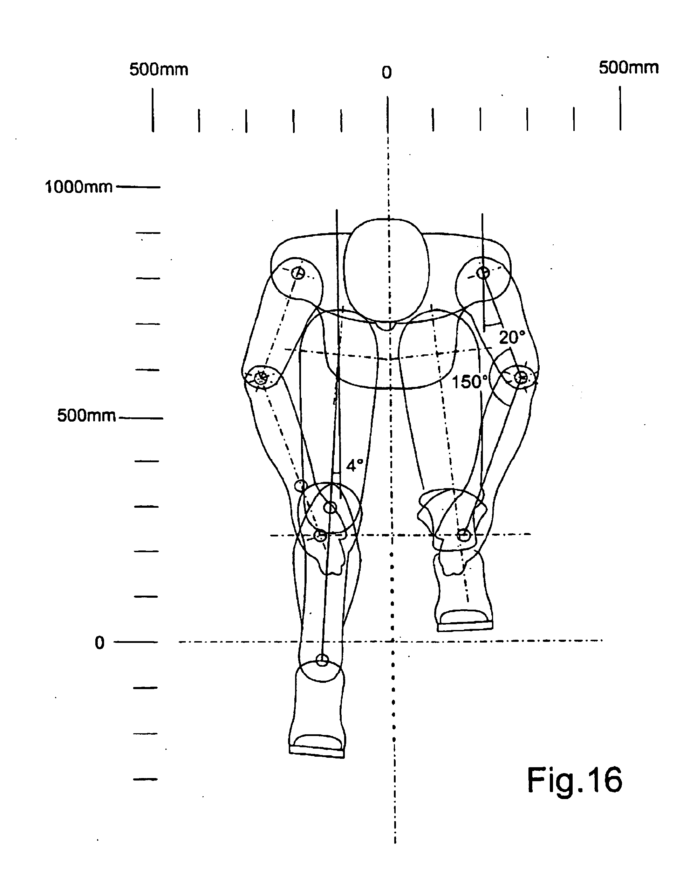

On a illustré sur les figures 15 et 16 les angles entre différentes parties du corps du conducteur lors du pédalage sur le tricycle 1.

Les différents éléments du tricycle 1, notamment le siège 6 et le pédalier 68, sont disposés de manière à ce que, lors du pédalage, le conducteur adopte une position assise dans laquelle l'axe de la tête A_{I} et l'axe du tronc Â₂ forment un angle compris par exemple entre 5° et 40°, notamment entre 10° et 30°, cet angle étant par exemple voisin de 20°.

L'axe du tronc A₂ et celui des cuisses A₃ du conducteur forment avantageusement un angle variant entre environ 75° et 160°, notamment entre environ 80° et 140°, lors du pédalage.

Les schémas 15 et 16 illustrent d'autres valeurs angulaires associées à la position du conducteur en position assise sur le tricycle 1.

Il convient de noter que la structure du tricycle 1 offre au conducteur un confort optimum tant sur le plan du pédalage que de l'accessibilité au tricycle, notamment lors de l'installation du conducteur ou de son départ du tricycle 1, lors du pédalage.

De plus, l'invention permet au conducteur d'avoir un champ de vision recommandé pour la conduite.

Dans la position de pédalage, les bras du conducteur forment avec l'axe du tronc, au niveau des épaules, un angle compris entre 30° et 60°, étant par exemple voisin de 45°.

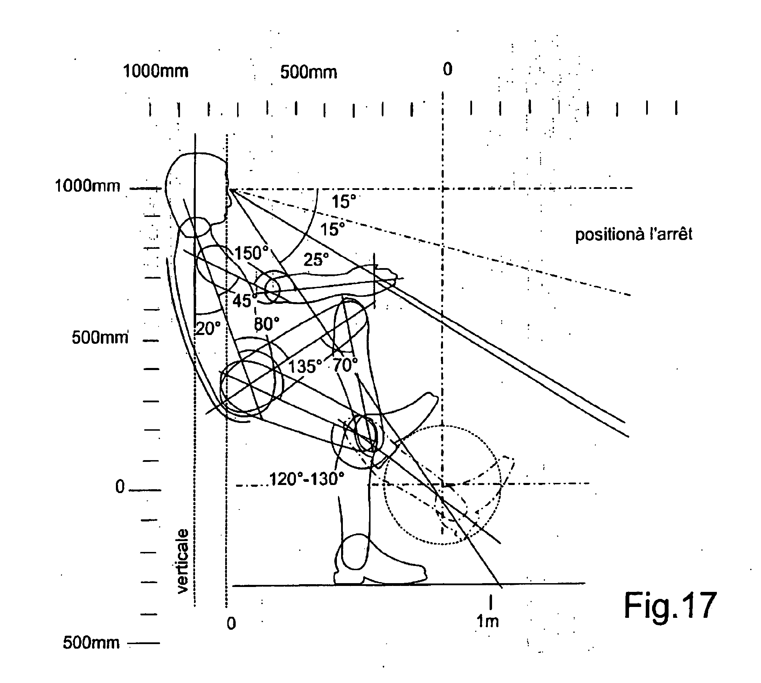

A l'arrêt, comme illustré sur la figure 17, le conducteur peut poser pied à terre, le genou formant un angle compris entre 120° et 130° environ.

Le tricycle selon l'invention permet un grand confort positionnel, il peut notamment être destiné à toute personne adulte en bonne condition physique mais aussi à une personne présentant un handicap concernant l'équilibre, le surpoids, des douleurs aux articulations des membres inférieurs, etc., et qui ne peut envisager un sport à pédalage avec des cycles existants.

## Revendications

1. Cycle (1) comportant une roue avant (2), au moins une roue arrière (3), un siège (6), un support (26) sur lequel est fixée la roue avant (2), un système de direction (5) agencé pour modifier l'orientation de la roue avant (2) et un châssis (4) comprenant une poutre centrale (10) avec une portion sensiblement en V (11), un pédalier (68) du cycle (1) monté sur la poutre centrale (10), au voisinage du point bas du V (11), le système de direction (5) comportant un volant (18) relié à un tube de direction (20) s'engageant dans une colonne de direction (21), **caractérisé par le fait que** le système de direction (5) est relié audit support (26) par une articulation de type cardan (25) agencée pour permettre au conducteur du cycle (1) de pédaler en position assise ergonomique sans pénibilité, le cycle (1) comporte en outre un système de blocage (34) du système de direction (5) qui permet de régler l'inclinaison de l'axe de direction (X) par rapport au châssis (4), le système de blocage (34) du système de direction (5) comprenant un capuchon (35) fixé sur le châssis (4) et pourvu d'une fente (36) permettant d'engager un bouton (37) solidaire de la colonne de direction (21) par l'intermédiaire de rondelles (39) soudées sur la surface extérieure de la colonne de direction (21), le bouton (37) comportant une portion extérieure (40), une portion intermédiaire (41) et une portion intérieure (42), la portion extérieure (40) et la portion intérieure (42) du bouton (37) présentant un contour circulaire, la portion intermédiaire (41) du bouton (37) présentant une forme non circulaire avec deux bords parallèles rectilignes (43), la fente (36) présente une zone médiane (45) de largeur réduite, cette largeur étant sensiblement égale à la largeur entre les deux bords parallèles rectilignes (43) de la portion intermédiaire (41) du bouton (37), la fente (36) comportant deux zones (46) sensiblement circulaires qui sont situées respectivement au-dessus et au-dessous de la zone médiane (45) en sorte qu'il soit possible, en tournant le bouton (37), de bloquer la colonne de direction (21) du système de direction (5) dans une position angulaire prédéfinie, qui correspond à une position d'utilisation du cycle (1), dans laquelle le bouton (37) est bloqué dans la zone de la fente (46) située au-dessus de la zone médiane (45) ou de bloquer la colonne de direction (21) du système de direction (5) dans une position rabattue sur le châssis (4) dans laquelle le bouton (37) est bloqué dans la zone de la fente (46) située au-dessous de la zone médiane (45).

2. Cycle selon la revendication 1, **caractérisé par le fait que** le pédalier (68) est fixé en un point du châssis (4) situé à une distance comprise entre 150 mm et 450 mm du sol et séparé du siège (6) d'une distance comprise entre 400 mm et 800 mm, le siège (6) étant séparé du sol d'une distance comprise entre 450 mm et 620 mm.

3. Cycle selon l'une des revendications précédentes, **caractérisé par le fait qu'**il est agencé de manière à ce qu'un conducteur du cycle (1) puisse pédaler dans une position assise dans laquelle les axes respectifs de la tête (A1) et du tronc (A2) du conducteur du cycle (1) forment un angle compris entre 5° et 40°.

4. Cycle selon l'une des revendications précédentes, **caractérisé par le fait que** le pédalier (68) et le siège (6) sont agencés de manière à ce que, lors du pédalage, les axes respectifs du tronc (A2) et des cuisses (A3) du conducteur du cycle (1) forment un angle variant entre environ 75° et 160°.

5. Cycle selon l'une des revendications précédentes, **caractérisé par** le fait qù'il est agencé de manière à ce qu'un conducteur du cycle (1) puisse adopter au repos, à l'arrêt du cycle (1), une position assise, pied à terre, l'un des genoux du conducteur du cycle (1) formant un angle compris entre 90° et 150°.

6. Cycle selon l'une des revendications précédentes, **caractérisé par le fait que**, dans la position de pédalage, les bras du conducteur du cycle (1) forment avec l'axe du tronc du conducteur du cycle (1), au niveau des épaules du conducteur du cycle (1), un angle compris entre 30° et 60°.

7. Cycle selon l'une des revendications précédentes, **caractérisé par le fait que** le siège (6) comprend une assise (50) et un dossier (51), le dossier (51) étant fixé de manière rigide à l'assise (50), le dossier (51) étant rigide au niveau des lombaires.

8. Cycle selon la revendication 7, **caractérisé par le fait que** le siège (6) est monté de manière coulissante sur le châssis (4) suivant une direction longitudinale du cycle (1)

9. Cycle selon l'une des revendications précédentes, **caractérisé par le fait qu'**il comporte un système de transmission à double renvoi (7) entre le pédalier (68) et au moins la dite roue arrière (3).

10. Cycle selon l'une des revendications précédentes, **caractérisé par le fait qu'**il comporte un système antivol (80) agencé pour bloquer le pédalier (68) dans une position prédéfinie, ce système antivol (80) comportant une tige (81) agencée pour s'engager dans une ouverture (82) d'une barre transversale du pédalier (68), cette tige (81) étant mobile entre une position déverrouillée et une position verrouillée, à l'encontre de l'effort exercé par un organe de rappel élastique (84). -

## Claims

1. Cycle (1) including a fore wheel (2), at least one rear wheel (3), a saddle area (6), a fork (26) on which is fastened the fore wheel (2), a steering device (5) so designed it can alter the direction of the fore wheel (2) and a frame (4) including a middle tube (10) with a part in a definite V form (11), a pedal board (68) of the cycle (1) set on the middle tube (10), next to the lower spot of the V (11), the steering device (5) including a handlebar (18) tied to a steering tube (20) engaging into a steering cylinder (21), **marked by the fact that** the steering device (5) is tied to the so-called fork (26) by a Cardan shaft (25) designed to allow the driver of the cycle (1) to pedal ergonomically and without exertion in a sitting position, the cycle (1) includes moreover a locking device (34) of the steering device (5) allowing to adjust the slope of the steering pivot (X) in relation to the frame (4), the locking device (34) of the steering device (5) with a cap (35) fastened on the frame (4) and provided with a slot (36) allowing to engage a push piece (37) rigidly locked with the steering cylinder (21) through rings (39) welded to the outside surface of the steering cylinder (21), the push piece (37) including an outside part (40), a middle part (41) and an inside part (42), the outside part (40) and the inside part (42) of the push piece (37) having a circular outline, the middle part (41) of the push piece (37) having a non-circular outline with two rectilinear parallel sides (43), the slot (36) has a middle section (45) of reduced width, this width being definitely equal to the width between the two rectilinear parallel sides (43) of the middle part (41) of the push piece (37), the slot (36) including two sections (46) definitely circular respectively set above and below the middle section (45) so that it is possible, when switching the push piece (37), to lock the steering cylinder (21) of the steering device (5) in an angular predefined position, matching a using position of the cycle (1), in which the push piece (37) is locked in the slot (46) section set above the middle section (45) or to lock the steering cylinder (21) of the steering device (5) in a position lowered on the frame (4) in which one the push piece (37) is locked in the slot (46) section set below the middle section (45).

2. Cycle according to claim 1, marked by the fact that the pedal board (68) is fastened on a spot of the frame (4) set at a distance between 150mm and 450mm from the ground and at a distance between 400mm and 800mm from the saddle area (6), the saddle area (6) being at a distance between 450mm and 620mm from the ground.

3. Cycle according to one of the former claims, marked by the fact that it is so designed that the driver of the cycle (1) may pedal in a sitting position in which the respective pivots of the head (A1) and of the trunk (A2) of the driver of the cycle (1) make an angle between 5° and 40°.

4. Cycle according to one of the former claims, marked by the fact that the pedal board (68) and the saddle area (6) are so designed that, when pedalling, the respective pivots of the trunk (A2) and of the thighs (A3) of the cycle (1) driver make an angle varying between about 75° and 160°.

5. Cycle according to one of the former claims, marked by the fact that it is so designed that a driver of the cycle (1) may take, when at rest, the cycle (1) still standing, a sitting position, one foot on the ground, one of the knees of the driver of the cycle (1) making an angle between 90° and 150°.

6. Cycle according to one of the former claims, marked by the fact that, in the pedalling position, the arms of the driver of the cycle (1) make with the pivot of the trunk of the driver of the cycle (1), by the shoulders of the driver of the cycle (1), an angle between 30° and 60°.

7. Cycle according to one of the former claims, marked by the fact that the saddle area (6) includes a saddle (50) and a back of seat (51), the back of seat (51) being rigidly fastened to the saddle (50), the back of seat (51) being rigid by the lumbar vertebra.

8. Cycle according to claim 7, marked by the fact that the saddle area (6) is set in a sliding way on the frame (4) in a longitudinal direction of the cycle (1).

9. Cycle according to one of the former claims, marked by the fact that it includes a transmission equipment with double return (7) between the pedal board (68) and at least the so-called rear wheel (3).

10. Cycle according to one of the former claims, marked by the fact that it includes an anti-theft device (80) so designed it locks the pedal board (68) in a predefined position, this anti-theft device (80) including a rod (81) designed to engage into an opening (82) of a transversal bar of the pedal board (68), this rod (81) being movable between a bolted position and an unbolted position, against the exertion of an elastic return part (84).

## Patentansprüche

1. Fahrrad (1) samt einem Forderrad (2), wenigstens einem Hinterrad (3), einem Sitz (6), einer Gabel (26) an der das Forderrad (2) befestigt ist, einer Steuervorrichtung (5) so verfertigt, sie kann die Richtung des Forderrades (2) abändern, und einem Rahmen (4) einschließlich eines Mittelrohres (10) mit einem merklichen V-förmigen Teil (11), einem Tretwerk (68) des Fahrrades (1) am Mittelrohr (10) befestigt, in der Nähe vom niedrigen Punkt des Vs (11), die Steuervorrichtung (5) samt einer Steuerstange (18), mit einem Steuerrohr (20) verbunden und in eine Steuersäule (21) eindringend, **dadurch gekennzeichnet, dass** die Steuervorrichtung (5) mit der so genannten Gabel (26) durch ein Kardangelenk verbunden ist, so dass der Fahrrad (1) Fahrer ergonomisch mühelos in einer sitzenden Haltung radeln kann, das Fahrrad (1) samt außerdem einer Sperrvorrichtung (34) der Steuervorrichtung (5), die das Regulieren der Neigung der Steuerachse (X) zum Rahmen (4) möglich macht, die Sperrvorrichtung (34) der Steuervorrichtung (5) enthält eine Kappe (35) auf dem Rahmen (4) befestigt und mit einer Spalte (36) ausgestattet, so ermöglicht das Hineinschieben eines Knopfes (37) solidarisch mit der Steuersäule (21) durch Scheiben (39) an der außen Oberfläche der Steuersäule (21) gelötet, der Knopf (37) samt eines Außenteils (40), eines Mittelteils (41) und eines Innenteils (42), der Außenteil (40) und der Innenteil (42) des Knopfes (37) mit kreisförmigen Umriss, der Mittelteil (41) des Knopfes (37) mit nicht kreisförmigen Umriss sondern zwei geradlinigen parallelen Seiten (43), die Spalte (36) mit einem Mittelbereich (45) von reduzierter Breite, diese reduzierte Breite merklich gleich der Breite zwischen den zwei geradlinigen parallelen Seiten (43) des Mittelteiles (41) des Knopfes (37), die Spalte (36) samt zwei merklich kreisförmigen Bereichen (46), die sich beiderseits oberhalb und unterhalb des Mittelbereichs (45) befinden, so dass beim drehen des Knopfes (37) es möglich sei die Steuersäule (21) der Steuervorrichtung (5) in einer vorbestimmte Ecklage zu sperren, die einer Gebrauchlage des Fahrrads (1) entspricht, in welcher der Knopf (37) im Spaltenbereich (46), die sich oberhalb des Mittelbereichs (45) befindet, oder die Steuersäule (21) der Steuervorrichtung (5) in einer auf dem Rahmen (4) niedergedrückten Lage, in welcher der Knopf (37) im Spaltenbereich (46), der sich unterhalb des Mittelbereichs (45) befindet, gesperrt ist, zu sperren.

2. Fahrrad gemäß Anspruch 1, **dadurch gekennzeichnet, dass** das Tretwerk (68) auf einem Punkt des Rahmens (4) befestigt ist, der zwischen 150mm und 450mm vom Boden entfernt, und vom Sitz (6) zwischen 400mm und 800mm entfernt ist, der Sitz (6) seinerseits ist zwischen 450mm und 620mm vom Boden entfernt.

3. Fahrrad gemäß einer von den vorigen Ansprüchen, **dadurch gekennzeichnet, dass** es so verfertigt ist, der Fahrrad (1) Fahrer in einer sitzenden Haltung radeln kann, in der beiderseits die Achsen des Kopfes (A1) und des Rumpfes (A2) vom Fahrrad (1) Fahrer einen Winkel zwischen 5° und 40° ausbilden.

4. Fahrrad gemäß einer von den vorigen Ansprüchen, **dadurch gekennzeichnet, dass** das Tretwerk (68) und der Sitz (6) so verfertigt sind, dass, beim Radeln, beiderseits die Achsen des Rumpfes (A2) und der Schenkel (A3) des Fahrrades (1) Fahrer einen Winkel zwischen etwa 75° und 160° ausbilden.

5. Fahrrad gemäß einer von den vorigen Ansprüchen, **dadurch gekennzeichnet, dass** es so verfertigt ist, ein Fahrrad (1) Fahrer beim Rasten, das Fahrrad (1) Stillstehend, eine sitzende Haltung mit einem Fuß am Boden haben kann, wobei ein der Knien des Fahrrad (1) Fahrers einen Winkel zwischen 90° und 150° ausbildet.

6. Fahrrad gemäß einer von den vorigen Ansprüchen, **dadurch gekennzeichnet, dass**, beim Radeln, die Arme des Fahrrad (1) Fahrers mit der Achse des Rumpfes des Fahrrad (1) Fahrers, in der Höhe der Schultern des Fahrrad (1) Fahrers, einen Winkel zwischen 30° und 60° ausbilden.

7. Fahrrad gemäß einer von den vorigen Ansprüchen, **dadurch gekennzeichnet, dass** der Sitz (6) einen Sattel (50) und eine Rücklehne (51) enthält, wobei die Rücklehne (51) starr befestigt an dem Sattel (50) ist, und die Rücklehne (51) starr in der Höhe der Lendenwirbelbeinen.

8. Fahrrad gemäß Anspruch 7, **dadurch gekennzeichnet, dass** der Sitz (6) in einer schiebender Art auf dem Rahmen (4) des Fahrrades (1) einer der Länge nach Richtung folgend aufgebaut ist.

9. Fahrrad gemäß einer von den vorigen Ansprüchen, **dadurch gekennzeichnet, dass** es eine Übertragungsausrüstung mit Doppelrückkehr (7) zwischen dem Tretwerk (68) und wenigstens dem so genannten Hinterrad (3) enthält.

10. Fahrrad gemäß einer von den vorigen Ansprüchen, **dadurch gekennzeichnet, dass** es eine Diebstahlsicherung (80) enthält, die so verfertigt ist, sie kann das Tretwerk (68) in einer vorbestimmten Ecklage sperren, diese Diebstahlsicherung (80) samt einem Stiel (81), der sich in eine Öffnung (82) einer querhindurchgehende Stange des Tretwerks (68) hinein schiebt, wobei dieser Stiel (81) wider die Kraft Äußerung eines elastisch rückstellenden Werkzeuges (84) zwischen eine aufriegelte Stellung und eine zuriegelte Stellung beweglich ist.
